# EUROPÄISCHE PATENTANMELDUNG

(11) **EP 0 593 812 A1**
(43) Veröffentlichungstag der Anmeldung: **27.04.1994**
(21) Anmeldenummer: 92118106.1
(22) Anmeldetag: 22.10.1992
(51) Int. Cl.: H04Q 11/04, H04J 14/08, H04L 12/56

(54) **Verfahren zur Ausregelung der Drift zwischen einem erwarteten Auftreten von Nachrichtenzellen und dem tatsächlichen Auftreten von Nachrichtenzellen**

(71) Anmelder: SIEMENS AKTIENGESELLSCHAFT, D-80333 München (DE)
(72) Erfinder: Glade, Martin, Dr., W-8000 München 70 (DE); Keller, Hendrik, Dr., W-8000 München 40 (DE)

(57) **Zusammenfassung**

In einem passiven optischen Netzwerk übertragen eine Mehrzahl von Teilnehmerstellen über zugehörige Teilnehmerabschlußeinrichtungen, Glasfasern und passive Koppler im Zuge von für sie eingerichteten virtuellen Verbindungen Nachrichtenzellen zu einer sämtlichen Teilnehmerstellen gemeinsamen Kopfstelle eines Vermittlungssystems. Zur Vermeidung von zeitlichen Überschneidungen von von verschiedenen Teilnehmerstellen abgegebenen Nachrichtenzellen sendet eine jeweilige Teilnehmerabschlußeinrichtung nur auf eine Sendeerlaubnis hin. Eine Sendeerlaubnis wird nach Maßgabe des Zählerstandes eines kopfstellenseitig vorgesehenen, teilnehmerstellenindividuellen Zahlers vergeben, dessen Zählerstand nach Maßgabe der für die betreffende virtuelle Verbindung bei Verbindungsaufbau festgelegten Nachrichtenzellenrate vorausberechnet wird. Eine mögliche Abweichung des vorausberechneten Zählerstandes vom Zählerstand eines teilnehmerstellenseitigen, teilnehmerstellenindividuellen Zählers, der das tatsächliche Auftreten von Nachrichtenzellen angibt, wird erfindungsgemäß durch Übertragung des vorausberechneten Zählerstandes zur betreffenden Teilnehmerstelle, Vergleich der beiden Zählerstände, Bildung eines Vergleichsergebnisses, Übertragung eines nach Maßgabe des Vergleichsergebnisses gebildeten Korrektursignals zur Kopfstelle und schrittweise Korrektur des vorausberechneten Zählerstandes ausgeregelt.

## Beschreibung

Die Erfindung bezieht sich auf ein passives optisches Netzwerk (PON). Bei einem passiven optischen Netzwerk sind eine Mehrzahl von Teilnehmerstellen über zugehörige Teilnehmerabschlußeinrichtungen, Glasfasern und passive Koppler mit einer sämtlichen Teilnehmerstellen gemeinsamen Kopfstelle eines Vermittlungssystems verbunden. Das passive optische Netz unterstützt die Übertragung von Schmalband- und Breitbanddiensten zwischen den Teilnehmerstellen und dem Vermittlungssystem. Die eigentliche Übertragung von Informationen erfolgt im Zuge von jeweiligen zwischen einer Teilnehmerstelle und dem Vermittlungssystem aufgebauten virtuellen Verbindungen nach einem asynchronen Übertragungsverfahren. Bei einem asynchronen Übertragungsverfahren werden Daten im Nutzdatenteil von Nachrichtenzellen konstanter Länge übertragen. Die Übertragung von Nachrichtenzellen erfolgt dabei mit einer für die betreffende virtuelle Verbindung bei Verbindungsaufbau festgelegten Nachrichtenzellenrate. Die Übertragung von Nachrichtenzellen von der Vermittlungsstelle in Richtung zu den Teilnehmerstellen erfolgt derart, daß sämtliche Nachrichtenzellen über die Glasfasern unter Verwendung einer ersten Wellenlänge sämtlichen Teilnehmerabschlußeinrichtungen zugeführt werden, wobei die Teilnehmerabschlußeinrichtungen an die zugehörige Teilnehmerstelle nur die Nachrichtenzellen weiterleiten, die der für sie eingerichteten virtuellen Verbindung zugehören. Die Übertragung von Nachrichtenzellen von den Teilnehmerabschlußeinrichtungen zu der Vermittlungsstelle erfolgt unter Verwendung einer zweiten Wellenlänge, wobei durch eine geeignete Zugangsregelung eine zeitliche Überschneidung von von unterschiedlichen Teilnehmerabschlußeinrichtungen ausgesendeten Nachrichtenzellen vermieden sein muß.

Dazu wurde in der EP-A-92 105 237.9 vorgeschlagen, in der Kopfstelle für jede Teilnehmerstelle einen Zähler vorzusehen, dessen Zählerstand nach Maßgabe der für die betreffende Teilnehmerstelle vereinbarten Nachrichtenzellenrate in regelmäßigen Abständen um einen vorgegebenen Betrag erhöht wird. Für einen Zähler, dessen Zählerstand einen vorgegebenen Zählerstand überschritten hat, der dem Bereitstehen einer Nachrichtenzelle zur Aussendung entspricht, wird ein Zustandszeichen gesetzt. Eine Teilnehmerabschlußeinrichtung, für deren zugehörigen Zähler bei einer zyklischen Abfrage der Zähler ein gesetztes Zustandszeichen detektiert wurde, erhält eine Sendeerlaubnis für eine größtmögliche, dem Zählerstand entsprechende Anzahl von Nachrichtenzellen. Eine Teilnehmerabschlußeinrichtung, die eine Sendeerlaubnis erhalten hat, sendet eine Folge von Einmeßzeichen und eine in der Sendeerlaubnis bezeichnete Anzahl von Nachrichtenzellen aus. Bei diesem Verfahren werden also an die Teilnehmerabschlußeinrichtungen Sendeerlaubnisse für Nachrichtenzellen nach Maßgabe eines für die einzelnen Teilnehmerstellen vorausberechneten Zählerstandes vergeben.

Bei diesem Verfahren kann es beispielsweise auf Grund eines geringen Schlupfes zwischen den Taktfrequenzen einer Teilnehmerstelle und der Kopfstelle - insbesondere im Verlauf eines längeren Zeitraumes - zu erheblichen Abweichungen zwischen dem nach Maßgabe des vorausberechneten Zählerstandes vermuteten Auftreten von Nachrichtenzellen in einer Teilnehmerstelle und dem tatsächlichen Auftreten von Nachrichtenzellen in der Teilnehmerstelle kommen.

Der Erfindung liegt das Problem zugrunde, das oben beschriebene Verfahren derart weiterzubilden, daß der genannte Nachteil vermieden wird.

Das Problem wird bei dem genannten Verfahren durch die Hinzunahme der Merkmale gelöst, daß
- der den tatsächlichen Zustand wiedergebende Zählerstand eines in jeder Teilnehmerabschlußeinrichtung vorgesehenen Zählers ermittelt wird, indem
   a) der Zählerstand für jede von der Teilnehmerstelle an die Teilnehmerabschlußeinrichtung abgegebene Nachrichtenzelle um den vorgegebenen Betrag erhöht wird und
   b) der Zählerstand für jede von der Teilnehmerabschlußeinrichtung an die Kopfstelle weitergeleitete Nachrichtenzelle um den vorgegebenen Betrag erniedrigt wird
- die für die jeweiligen Teilnehmerstellen vorausberechneten Zählerstände von der Kopfstelle zu den betreffenden Teilnehmerabschlußeinrichtungen weitergeleitet werden
- in jeder Teilnehmerabschlußeinrichtung der den tatsächlichen Zustand wiedergebende Zählerstand mit dem vorausberechneten Zählerstand verglichen wird
- die Teilnehmerabschlußeinrichtung eine Mitteilung über das Vergleichsergebnis an die Kopfstelle übermittelt und
- der errechnete Zählerstand in der Kopfstelle nach Maßgabe des Vergleichsergebnisses korrigiert wird.

Die Erfindung bringt den Vorteil eines - auch nach Ablauf eines längeren Zeitraumes - Vorliegens von dem tatsächlichen Auftreten von Nachrichtenzellen in den einzelnen Abschlußeinrichtungen entsprechenden Zählerständen in der Kopfstelle mit sich, womit eine Vergeudung von Übertragungskapazität auf Grund einer fehlerhaften Vergabe von Sendeerlaubnissen vermieden ist.

Weitere vorteilhafte Ausgestaltungen des erfindungsgemaßen Verfahrens ergeben sich aus den Unteransprüchen.

Die Erfindung wird nun als Ausführungsbeispiel in zum Verständnis erforderlichem Umfang anhand einer Figur beschrieben.

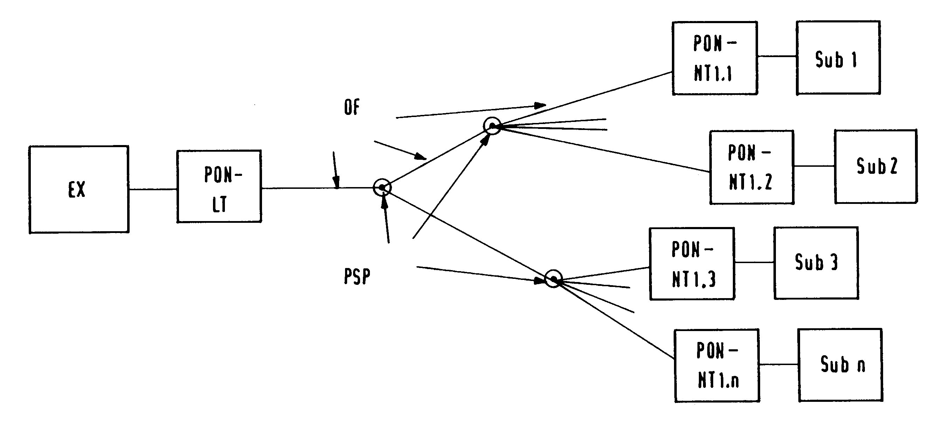

Fig. 1 zeigt die prinzipielle Darstellung eines passiven optischen Netzes. Eine Mehrzahl von Teilnehmerstellen Subl...Subn ist jeweils über eine elektrische Verbindung mit einer zugehörigen Teilnehmerabschlußeinrichtung PON-NT1.1,...,PON-NT1.n verbunden. Die Teilnehmerabschlußeinrichtungen sind über optische Fasern OF und passive Koppler PSP mit einer Kopfstelle PON-LT verbunden. Die Kopfstelle ist über eine elektrische Verbindung mit einer Vermittlungseinrichtung EX verbunden. Die Vermittlungseinrichtung möge mit einem nicht näher dargestellten Kommunikationsnetz verbunden sein. Zwischen der Vermittlungseinrichtung und den Teilnehmerstellen findet eine bidirektionale Nachrichtenübertragung nach einem asynchronen Übertragungsverfahren statt. Dabei tauscht eine jeweilige Teilnehmerstelle im Zuge einer virtuellen Verbindung Nachrichtenzellen mit der Vermittlungseinrichtung aus, wobei die Übertragung der Nachrichtenzelle mit einer beim Aufbau der virtuellen Verbindung vereinbarten Nachrichtenzelle erfolgt. Bei den Nachrichtenzellen möge es sich dabei um Zellen fester Länge handeln, welche jeweils über einen Zellkopf mit z.B. fünf Oktett Länge sowie einen Nutzdatenteil mit z.B. 48 Oktett Länge verfügen. In dem Nutzdatenteil erfolgt die Übertragung der eigentlichen Nachrichtensignale. Unter Nachrichtensignalen sollen dabei Nachrichten- und Textsignale sowie Sprach- bzw. Bildsignale in digitaler Form verstanden werden. Ein Nachrichtenzellenkopf weist u.a. eine sogenannte virtuelle Kanalnummer auf, die die virtuelle Verbindung bezeichnet, zu der die betreffende Nachrichtenzelle gehört. Bei der Übertragung von der Vermittlungseinrichtung in Richtung zu den Teilnehmerstellen werden die Nachrichtenzellen sämtlicher virtueller unter Verwendung einer ersten Wellenlänge sämtlichen Teilnehmerabschlußeinrichtungen zugeführt. Von einer jeweiligen Teilnehmerabschlußeinrichtung werden an die zugehörige Teilnehmerstelle nur die Nachrichtenzellen weitergeleitet, die nach Maßgabe der virtuellen Kanalnummer der für die betreffende Teilnehmerstelle aufgebauten virtuellen Verbindung zugehören. Die Übertragung von Nachrichtenzellen von den Teilnehmerstellen in Richtung zu der Vermittlungseinrichtung erfolgt auf den optischen Fasern unter Verwendung einer zweiten Wellenlänge. Zur Vermeidung von zeitlichen Überschneidungen von Nachrichtenzellen beim Aussenden durch die Teilnehmerabschlußeinrichtungen ist vorgesehen, daß eine Teilnehmerabschlußeinrichtung nur dann sendet, wenn sie von der Kopfstelle eine Sendeerlaubnis erhalten hat. In der Kopfstelle ist für jede Teilnehmerabschlußeinrichtung ein Zähler vorgesehen, dessen Zählerstand in regelmäßigen Abständen um einen nach Maßgabe der für die betreffende virtuelle Verbindung vereinbarten Nachrichtenzellenrate sprechenden Betrag erhöht wird. Überschreitet der Zählerstand eines Zählers einen Wert, der ein Bereitstehen einer Nachrichtenzelle in der zugehörigen Teilnehmerabschlußeinrichtung erwarten läßt, so wird für diesen Zähler ein Zustandszeichen gesetzt. Die Zähler werden zyklisch auf das Vorliegen von gesetzten Zustandszeichen abgefragt. Wird bei der zyklischen Abfrage ein gesetztes Zustandszeichen detektiert, so sendet die Kopfstelle eine Sendeerlaubnis aus, die zum einen die betreffende Teilnehmerabschlußeinrichtung und zum andern eine größtmögliche, dem aktuellen Zählerstand entsprechende Anzahl von Nachrichtenzellen bezeichnet. Es sei angemerkt, daß die größtmögliche Anzahl von Nachrichtenzellen auf einen Größtwert beschränkt sein kann. Eine Teilnehmerabschlußeinrichtung, die eine Sendeerlaubnis erhalten hat, sendet eine festgelegte Folge von z.B. 64 Bit Einmeßzeichen und die in dieser Sendeerlaubnis bezeichnete Anzahl von Nachrichtenzellen zur Kopfstelle hin aus. Stehen in einer Teilnehmerabschlußeinrichtung nicht die vollständige, in der Sendeerlaubnis bezeichnete Anzahl von Nachrichtenzellen zur Aussendung bereit, so wird die in der Sendeerlaubnis bezeichnete Anzahl durch Aussendung von Leerzellen ausgeschöpft. Unter Leerzellen werden Nachrichtenzellen verstanden, die in ihrem Nutzdatenteil keine Nachrichtensignale führen und die von der Vermittlungseinrichtung nicht an das Kommunikationsnetz weitergeleitet werden. Die Einmeßzeichen dienen einerseits der Einregelung der Kopfstelle auf die Amplitude der nachfolgenden Nachrichtenzellen und andererseits der Feinanpassung an die Phasenlage der ankommenden Nachrichtenzellen. Bei dem beschriebenen Verfahren erfolgt also die Zuteilung von Übertragungszeiträumen für Nachrichtenzellen durch Vorausberechnung nach Maßgabe der für die einzelnen virtuellen Verbindungen eingerichteten Nachrichtenzellenrate.

Bereits sehr kleine Abweichungen von z.B. ± 20 ppm zwischen der Bitrate in der Kopfstelle und der Bitrate in einer Teilnehmerabschlußeinrichtung können - insbesondere im Verlauf eines längeren Zeitraumes - dazu führen, daß die in der Kopfstelle vorausberechnete Anzahl von Nachrichtenzellen nicht mehr mit der tatsächlichen Anzahl von in einer Teilnehmerabschlußeinrichtung zur Aussendung anstehenden Nachrichtenzellen übereinstimmt.

Erfindungsgemäß werden die Abweichungen der vorausberechneten Zählerstände für die einzelnen Teilnehmerabschlußeinrichtungen ausgeregelt. Der betreffende aktuelle, vorausberechnete Zählerstand wird den einzelnen Teilnehmerabschlußeinrichtungen vorzugsweise in Verbindung mit der Erteilung einer Sendeerlaubnis von der Kopfstelle mitgeteilt. In jeder Teilnehmerabschlußeinrichtung ist ein Zähler vorgesehen, dessen Zählerstand jede von der Teilnehmerstelle an die Teilnehmerabschlußeinrichtung zur Weiterleitung an die Kopfstelle abgegebene Nachrichtenzelle um einen eine Nachrichtenzelle repräsentierenden Betrag erhöht wird. Der Zähler wird für jede an die Kopfstelle weitergeleitete Nachrichtenzelle um den eine Nachrichtenzelle repräsentierenden Betrag erniedrigt. Die Zähler in den Teilnehmerabschlußeinrichtungen werden also in prinzipiell gleicher Weise inkrementiert und dekrementiert wie die zugehörigen Zähler in der Kopfstelle; jedoch gibt der jeweilige Zählerstand der Zähler in den einzelnen Teilnehmerabschlußeinrichtungen den tatsächlichen Bestand von zur Aussendung anstehenden Nachrichtenzellen wieder. In der Teilnehmerabschlußeinrichtung wird der aktuelle, von der Kopfstelle mitgeteilte, vorausberechnete Zählerstand mit dem den tatsächlichen Zustand wiedergebenden Zählerstand verglichen. Der minimale Zeitraum, der durch eine Einheit des Zählerstandes aufgelöst werden kann, ist gegeben durch den Zeitraum, den eine niederstbitratige Verbindung zur Auffüllung einer Nachrichtenzelle benötigt dividiert durch dem eine Nachrichtenzelle repräsentierenden Betrag. Unter der Annahme einer niederstbitratigen Verbindung mit 64 kbit/s einer Nutzdatenlänge von 48 Oktetts je Nachrichtenzelle und einem eine Nachrichtenzelle repräsentierenden Betrag von 256 beträgt die zeitliche Auflösung 6ms/256. Ergibt der Vergleich zwischen dem vorausberechneten Zählerstand und dem den tatsächlichen Zustand wiedergebenden Zählerstand für eine betrachtete Abschlußeinrichtung eine positive oder eine negative Abweichung im Bereich einer Einheit der zeitlichen Auflösung, so wird der vorausberechnete Zählerstand in der Kopfstelle nicht geändert.

Ergibt der Vergleich eine Abweichung, die außerhalb einer jeweiligen, im Bereich einer Einheit der zeitlichen Auflösung liegenden Schwelle liegt, so wird ein jeweiliges Korrektursignal an die Kopfstelle übermittelt. Eine feine Abweichung, die durch eine mäßige Überschreitung einer im Bereich einer Einheit der zeitlichen Auflösung liegenden Schwelle gegeben ist, bewirkt ein Korrektursignal, auf das hin der Zählerstand des betreffenden Zählers um eine Einheit korrigiert wird. Bei einem verzögerten Eintreffen einer Nachrichtenzelle von einer Teilnehmerstelle in der zugehörigen Teilnehmerabschlußeinrichtung kann in dieser Teilnehmerabschlußeinrichtung eine Sendeerlaubnis für eine Nachrichtenzelle vorliegen, ohne daß eine entsprechende Nachrichtenzelle zur Aussendung zur Kopfstelle bereitsteht. In einer solchen Situation sendet die betreffende Teilnehmerabschlußeinrichtung eine Leerzelle aus, ohne daß der Zählerstand des den tatsächlichen Zustand wiedergebenden Zählers erniedrigt wird. Bei dem nächstfolgenden Vergleich der Zählerstände für diese Teilnehmerstelle ergibt sich als Ergebnis eine grobe Abweichung der Zählerstände. Eine Angleichung der Zählerstände würde sich in diesem Fall - bei Zugrundelegung einer Korrekturschrittweite von einer Einheit - über eine Anzahl von Sendeerlaubnissen, die dem einer Nachrichtenzelle repräsentierenden Betrag gleicht. Eine solche Angleichung würde einen hohen Zeitbedarf erfordern. In dem zuletzt beschriebenen Fall liegt das Vergleichsergebnis außerhalb einer eine grobe Abweichung bezeichnenden Schwelle. Bei einem Vergleichsergebnis, das außerhalb einer eine grobe Abweichung bezeichnenden Schwelle liegt, kann ein Korrektursignal bewirkt werden, das in der Kopfstelle eine Korrektur mit einer, eine Mehrzahl von Einheiten umfassenden Schrittweite bewirkt.

Das Korrektursignal muß also vier unterschiedliche Vergleichsergebnisse darstellen können, nämlich
i) das Vergleichsergebnis liegt innerhalb von zwei geringe Abweichungen bezeichnenden Schwellen
ii) das Vergleichsergebnis liegt jeweils außerhalb einer positive bzw. negative geringe Abweichungen bezeichnenden Schwelle
iii) das Vergleichsergebnis liegt außerhalb einer eine grobe Abweichung bezeichnenden Schwelle.

Das Korrektursignal wird mit 2 Bit codiert.

## Patentansprüche

1. Verfahren zur Ausregelung von Abweichungen zwischen einem vorausberechneten Zählerstand und einem den tatsächlichen Zustand wiedergebenden Zählerstand bei einem Verfahren zur Zuteilung von Übertragungszeiträumen für ein Übertragungssystem mit einer Vielzahl von Teilnehmerstellen (Subl.. ..Subn), die über jeweilige Teilnehmerabschlußeinrichtungen (PON-NT1.1,...,PON-NT1.n), Glasfasern (OF) und passive Koppler (PSP) mit einer sämtlichen Teilnehmereinrichtungen gemeinsamen Kopfstelle verbunden sind, wobei in dem Übertragungssystem
- die einer Teilnehmerstelle zugeführten oder von ihr abgegebenen Daten in Nachrichtenzellen im Zuge einer virtuellen Verbindung nach einem asynchronen Übertragungsverfahren übertragen werden,
- jede Nachrichtenzelle einen Nutzdatenteil konstanter Länge zur Aufnahme der Daten und einen dem Nutzdatenteil vorangestellten Nachrichtenzellenkopf konstanter Länge aufweist,
- für jede virtuelle Verbindung eine Nachrichtenzellenrate eingerichtet ist,
- der Zählerstand eines kopfstellenseitig vorgesehenen, teilnehmerabschlußeinrichtungsindividuellen Zählers dadurch vorausberechnet wird, daß
a) der Zählerstand nach Maßgabe der Nachrichtenzellenrate der für die betreffende Teilnehmerstelle eingerichteten virtuellen Verbindung in regelmäßigen Abständen um einen vorgegebenen Betrag erhöht wird,
b) für einen Zähler, dessen Zählerstand einen vorgegebenen Zählerstand überschreitet, ein Zustandszeichen gesetzt wird,
c) die Zähler sämtlicher Teilnehmerstellen auf das Vorhandensein von gesetzten Zustandszeichen abgefragt werden,
d) eine Teilnehmerabschlußeinrichtung, deren zugehöriger Zähler bei der Abfrage ein gesetztes Zustandszeichen aufweist, eine Sendeerlaubnis für eine größtmögliche, dem jeweiligen Zählerstand entsprechende Anzahl von Nachrichtenzellen erhält, wobei der Zählerstand dieses Zählers um einen dieser Anzahl entsprechenden Betrag erniedrigt und das Zustandszeichen bei Unterschreiten des vorgegebenen Zählerstandes zurückgesetzt wird und
- eine Teilnehmerstelle, die eine Sendeerlaubnis erhalten hat, eine Folge von Einmeßzeichen und unmittelbar daran anschließend eine der jeweiligen Sendeerlaubnis entsprechende Anzahl von Nachrichtenzellen zur Kopfstelle hin aussendet,
**dadurch gekennzeichnet,**
daß
- der den tatsächlichen Zustand wiedergebende Zählerstand eines in jeder Teilnehmerabschlußeinrichtung vorgesehenen Zählers ermittelt wird, indem
a) der Zählerstand für jede von der Teilnehmerstelle an die Teilnehmerabschlußeinrichtung abgegebene Nachrichtenzelle um den vorgegebenen Betrag erhöht wird und
b) der Zählerstand für jede von der Teilnehmerabschlußeinrichtung an die Kopfstelle weitergeleitete Nachrichtenzelle um den vorgegebenen Betrag erniedrigt wird
- die für die jeweiligen Teilnehmerstellen vorausberechneten Zählerstände von der Kopfstelle zu den betreffenden Teilnehmerabschlußeinrichtungen weitergeleitet werden
- in jeder Teilnehmerabschlußeinrichtung der den tatsächlichen Zustand wiedergebende Zählerstand mit dem vorausberechneten Zählerstand verglichen wird
- die Teilnehmerabschlußeinrichtung eine Mitteilung über das Vergleichsergebnis an die Kopfstelle übermittelt und
- der errechnete Zählerstand in der Kopfstelle nach Maßgabe des Vergleichsergebnisses korrigiert wird.

2. Verfahren nach Anspruch 1,
**dadurch gekennzeichnet,**
daß die vorausberechneten Zählerstände jeweils zusammen mit einer Sendeerlaubnis an eine jeweilige Teilnehmerabschlußeinrichtung weitergeleitet werden.

3. Verfahren nach einem der vorstehenden Ansprüche,
**dadurch gekennzeichnet,**
daß das Vergleichsergebnis nach Maßgabe der Überschreitung von feine und grobe Abweichungen bezeichnenden Schwellen gebildet wird.

4. Verfahren nach einem der vorstehenden Ansprüche,
**dadurch gekennzeichnet,**
daß das Vergleichsergebnis von einer jeweiligen Teilnehmerabschlußeinrichtung zusammen mit den Einmeßzeichen und der Anzahl von Nachrichtenzellen zur Kopfstelle übermittelt wird.

5. Verfahren nach einem der vorstehenden Ansprüche,
**dadurch gekennzeichnet,**
daß die Korrektur des Zählerstandes eines Zählers auf die jedesmalige Mitteilung eines Vergleichsergebnisses für den zugehörigen Zähler um einen vorgegebenen Wert erfolgt.

6. Verfahren nach Anspruch 5,
**dadurch gekennzeichnet,**
daß der vorgegebene Wert nach Maßgabe des Vergleichsergebnisses gebildet wird.
